# EUROPEAN PATENT SPECIFICATION

(11) **EP 4 495 783 B1**
(45) Date of publication and mention of the grant of the patent: **14.10.2026**
(21) Application number: 23921588.2
(22) Date of filing: 31.05.2023
(51) Int. Cl.: G06F 12/02

(54) **MEMORY SYSTEM, OPERATION METHOD THEREFOR, STORAGE MEDIUM AND MEMORY CONTROLLER**
SPEICHERSYSTEM, BETRIEBSVERFAHREN DAFÜR, SPEICHERMEDIUM UND SPEICHERSTEUERUNG
SYSTÈME DE MÉMOIRE, SON PROCÉDÉ DE FONCTIONNEMENT, SUPPORT DE STOCKAGE ET DISPOSITIF DE COMMANDE DE MÉMOIRE

(43) Date of publication of application: 22.01.2025
(73) Proprietor: Yangtze Memory Technologies Co., Ltd., Wuhan, Hubei 430000 (CN)
(72) Inventor: WANG, Hao, Wuhan, Hubei 430000 (CN)
(74) Representative: Lippert Stachow Patentanwälte Rechtsanwälte
(86) International application number: PCT/CN2023/097441
(87) International publication number: WO 2024/243855

(56) References cited:
- CN-A- 104 268 094
- CN-A- 111 324 552
- CN-A- 113 297 099
- CN-A- 115 185 858
- KR-A- 20120 037 218
- US-A1- 2016 342 509
- US-A1- 2016 342 509
- US-A1- 2020 089 617
- US-A1- 2020 201 547

## Description

### FIELD OF TECHNOLOGY

An example of the present disclosure relates to the field of semiconductor technology, and in particular, a memory system and method of operating thereof, storage medium and memory controller.

### BACKGROUND

A memory device is a memory apparatus configured to maintain information in modern information technology. A flash memory, as a typical non-volatile semiconductor memory, has several advantages, such as, high storage density, controllable cost of production, suitable speed for programming and erasing, and retention characteristics, etc., and is gradually becoming a mainstream in the storage market.

A memory system, such as, a Solid State Drive (SSD) for personal computer and server, and Universal Flash Storage (UFS) for a mobile phone and various embedded systems, may include a flash memory as its permanent storage medium. Therefore, how to further improve performance of reading and writing data in a memory system has become an urgent problem to be solved in the industry. Document US2020/089617 A1 discloses a memory system comprising a non-volatile memory configured to store a multi-level mapping table for logical-to-physical address translation, a cache configured to cache a part of the multi-level mapping table; and a controller configured to control the non-volatile memory and the cache.

### SUMMARY

The invention is set out in the appended independent claims. Advantageous embodiments are defined by the appended dependent claims.

In a first aspect, an example of the present disclosure provides a memory system, the memory system includes: at least one non-volatile memory device and a memory controller coupled to the at least one non-volatile memory device; wherein, a multi-level mapping table is stored in the memory device, and the multi-level mapping table is to implement mapping from a logical address to a physical address; the memory controller includes a buffer, and a portion of the multi-level mapping table is stored in the buffer; the memory controller is configured to: perform a random read operation on the data stored in the memory device; wherein in response to a random read range corresponding to the random read operation meeting a preset condition, adjust capacity for storing different levels of mapping tables in the buffer.

In some examples, the multi-level mapping table includes a first-level mapping table, a second-level mapping table, and a third-level mapping table, a physical address of the second-level mapping table is stored in the first-level mapping table, a physical address of the third-level mapping table is stored in the second-level mapping table, a physical address of data is stored in the third-level mapping table, the whole first-level mapping table, a portion of the second-level mapping table and a portion of the third-level mapping table are stored in the buffer.

In some examples, the memory controller is configured to: in response to the random read range being greater than or equal to a preset value, increase a ratio of a capacity for storing the second-level mapping table to a total capacity for storing the second-level mapping table and the third-level mapping table in the buffer.

In some examples, the memory controller is configured to: in response to the random read range being greater than or equal to a preset value, obtain a target buffer hit rate of mapping table; detect the current buffer hit rate of mapping table; in response to the current buffer hit rate of mapping table being lower than the target buffer hit rate of mapping table, increase the ratio of the capacity for storing the second-level mapping table to the total capacity for storing the second-level mapping table and the third-level mapping table in the buffer until the current buffer hit rate of mapping table is greater than or equal to the target buffer hit rate of mapping table.

In some examples, the memory controller is configured to: determine a difference between the current buffer hit rate of mapping table and the target buffer hit rate of mapping table; according to the difference, determine increasing quantity of the capacity for storing the second-level mapping table in the buffer in this adjustment; wherein the increasing quantity is positively correlated with the difference.

In some examples, the memory controller is configured to: in response to the current buffer hit rate of mapping table being lower than the target buffer hit rate of mapping table, and the ratio of the current capacity for storing the second-level mapping table to the total capacity for storing the second-level mapping table and the third-level mapping table in the buffer reaching a preset ratio, stop adjusting the capacity for storing different levels of mapping tables in the buffer.

In some examples, the memory controller is configured to: determine the target buffer hit rate of mapping table according to the random read range.

In some examples, the memory controller is configured to: in response to the random read range being less than the preset value, maintain the capacity for storing the second-level mapping table and the capacity for storing the third-level mapping table in the buffer being unchanged.

In some examples, the memory controller is configured to: determine the preset value according to the current capacity for storing the second-level mapping table in the buffer and in combination with mapping rules for various levels of mapping tables.

In some examples, the memory controller is configured to: in response to the random read range being greater than or equal to a preset value, increase the total capacity for storing the second-level mapping table and the third-level mapping table in the buffer.

In some examples, the multi-level mapping table includes a first-level mapping table and a second-level mapping table, a physical address of the second-level mapping table is stored in the first-level mapping table, a physical address of data is stored in the second-level mapping table, a portion of the first-level mapping table and a portion of the second-level mapping table are stored in the buffer; the memory controller is configured to: in response to the random read range being greater than or equal to a preset value, increase the ratio of the capacity for storing the first-level mapping table to the total capacity for storing the first-level mapping table and the second-level mapping table in the buffer.

In some examples, the memory system includes a DRAM-less memory system and the buffer includes a static random access memory.

In some examples, the memory system includes a flash storage, and the memory device includes a NAND memory.

In a second aspect, an example of the present disclosure provides an method of operating a memory system, the memory system includes: at least one non-volatile memory device and a memory controller coupled to the at least one non-volatile memory device; wherein, a multi-level mapping table is stored in the memory device, and the multi-level mapping table is to implement mapping from a logical address to a physical address; the memory controller includes a buffer, and a portion of the multi-level mapping table is stored in the buffer; the method including: performing a random read operation on the data stored in the memory device; in response to the random read range corresponding to the random read operation meeting a preset condition, adjusting the capacity for storing different levels of mapping tables in the buffer.

In some examples, the multi-level mapping table includes a first-level mapping table, a second-level mapping table, and a third-level mapping table, a physical address of the second-level mapping table is stored in the first-level mapping table, a physical address of the third-level mapping table is stored in the second-level mapping table, a physical address of data is stored in the third-level mapping table, the whole first-level mapping table, a portion of the second-level mapping table and a portion of the third-level mapping table are stored in the buffer; adjusting the capacity for storing different levels of mapping tables in the buffer in response to the random read range corresponding to the random read operation meeting a preset condition including: in response to the random read range being greater than or equal to a preset value, increasing the ratio of the capacity for storing the second-level mapping table to the total capacity for storing the second-level mapping table and the third-level mapping table in the buffer.

In some examples, in response to the random read range being greater than or equal to a preset value, increasing the ratio of the capacity for storing the second-level mapping table to the total capacity for storing the second-level mapping table and the third-level mapping table in the buffer, including: in response to the random read range being greater than or equal to a preset value, obtaining a target buffer hit rate of mapping table; detecting the current buffer hit rate of mapping table; in response to the current buffer hit rate of mapping table being lower than the target buffer hit rate of mapping table, increasing the ratio of the capacity for storing the second-level mapping table to the total capacity for storing the second-level mapping table and the third-level mapping table in the buffer until the current buffer hit rate of mapping table is greater than or equal to the target buffer hit rate of mapping table.

In some examples, the method further including: determining the difference between the current buffer hit rate of mapping table and the target buffer hit rate of mapping table; according to the difference, determining increasing quantity of the capacity for storing the second-level mapping table in the buffer in this adjustment; wherein the increasing quantity is positively correlated with the difference.

In some examples, the method further including: in response to the current buffer hit rate of mapping table being lower than the target buffer hit rate of mapping table, and the ratio of the current capacity for storing the second-level mapping table to the total capacity for storing the second-level mapping table and the third-level mapping table in the buffer reaching a preset ratio, stop adjusting the capacity for storing different levels of mapping tables in the buffer.

In a third aspect, an example of the present disclosure provides a storage medium having executable instructions stored thereon, which when executed by a processor, implement the operations of the method of any one of the examples described above.

In a fourth aspect, an example of the present disclosure provides a memory controller, including: a buffer and a control component, wherein, the buffer is configured to store a portion of a multi-level mapping table in the non-volatile memory device; and the multi-level mapping table is configured to implement mapping from a logical address to a physical address; the control component is configured to: perform a random read operation on the data stored in the memory device; in response to the random read range corresponding to the random read operation meeting a preset condition, adjust the capacity for storing different levels of mapping tables in the buffer.

In some examples, the memory controller further includes: a flash translation layer, connecting the control component and the buffer; the flash translation layer is configured to translate the logical address into a corresponding physical address according to the mapping information in the multi-level mapping table stored in the buffer.

In some examples, the control component is further configured to: receive instructions from a host to perform read, write and erase operations on the memory device; the buffer is further configured to temporarily store data transferred between the host and the memory device; the memory controller further including: an encoder/decoder, for encoding and decoding data transferred between the host and the memory device.

An example of the present disclosure further provides another memory system, the memory system includes: at least one non-volatile memory device and a memory controller coupled to the at least one non-volatile memory device; wherein, a multi-level mapping table is stored in the memory device, and the multi-level mapping table is to implement mapping from a logical address to a physical address; the memory controller includes a buffer, and a portion of the multi-level mapping table is stored in the buffer; the memory controller is configured to: perform a random read operation on the data stored in the memory device; in response to the random read range corresponding to the random read operation meeting a preset condition, adjust the quantity of the capacity for different levels of mapping tables in one loading from the memory device to the buffer.

In a memory system provided by an example of the present disclosure, a memory device stores a multi-level mapping table, and the buffer of the memory controller is configured to load a portion of the multi-level mapping table, and when the random read range meets a preset condition, the memory controller adjusts the capacity for storing different levels of mapping tables in the buffer. In this way, in one aspect, when a random read operation for a large range is performed, the memory controller may increase the capacity for storing at least one level of the mapping table in the buffer, so as to improve the buffer hit rate of mapping table, thereby the times of updating the mapping table from the memory device to the buffer is reduced, the time overhead for searching the corresponding mapping table is reduced, and the performance of a random read for a large range in the memory system is improved; in another aspect, dynamically adjusting the capacity for storing different levels of mapping tables in the buffer may improve utilization of the buffer and have little impact on other task scheduling, thus reduce problems such as buffer resource competition.

### BRIEF DESCRIPTION OF THE DRAWINGS

FIG.1 is a schematic diagram of an example system including a memory device provided by an example of the present disclosure;
FIG.2a is a schematic diagram of a memory card provided by an example of the present disclosure;
FIG.2b is a schematic diagram of a SSD provided by an example of the present disclosure;
FIG.3 is a schematic diagram of a memory system provided by an example of the present disclosure;
FIG.4 is a schematic diagram of a multi-level mapping table provided by an example of the present disclosure;
FIG.5 is a schematic diagram of various levels of mapping tables loaded in a buffer provided by an example of the present disclosure;
FIG.6 is a schematic diagram of another memory system provided by an example of the present disclosure;
FIG.7 is a flow chart of operations for a memory controller to adjust the capacities of various levels of mapping tables in a buffer provided by an example of the present disclosure;
FIG.8 is a schematic diagram of a negative feedback dynamic adjustment mechanism for a buffer hit rate of mapping table provided by an example of the present disclosure.

### DETAILED DESCRIPTION

Illustrated examples of the present disclosure will be described in more detail below with reference to the accompanying drawings. Although illustrated examples of the present disclosure are shown in the accompanying drawings, it should be understood that the present disclosure may be implemented in various forms and should not be limited to the specific examples set forth herein. Rather, these examples are provided so that the present disclosure can be more thoroughly understood, and the scope of the present disclosure can be fully conveyed to those skilled in the art.

In the following description, numerous specific details are given in order to provide a more thorough understanding of the present disclosure. However, it will be apparent to one skilled in the art that the present disclosure may be practiced without one or more of these details. In other examples, in order to avoid confusion with the present disclosure, some technical features which are well known in the art are not described; that is, not all features of the actual example are described here, and well-known functions and structures are not described in detail.

In the accompanying drawings, size of a layer, a region, an element and their relative sizes may be exaggerated for clarity. Like reference numerals refer to like elements throughout.

It will be understood that when an element or layer is referred to as being "on," "adjacent to," "connected to" or "coupled to" another element or layer, it may be directly on, adjacent to, connected to or coupled to another element or layer, or intervening elements or layers may be present. In contrast, when an element is referred to as being "directly on," "directly adjacent to," "directly connected to" or "directly coupled to" another element or layer, there is no intervening elements or layers present. It will be understood that, although the terms first, second, third etc., may be configured to describe various elements, components, regions, layers and/or parts, these elements, components, regions, layers and/or parts should not be limited by these terms. These terms are only configured to distinguish one element, component, region, layer or part from another element, component, region, layer or part. Thus, a first element, component, region, layer or part discussed below may be termed as a second element, component, region, layer or part without departing from teachings of the present disclosure. Whereas a second element, component, region, layer or part is discussed, it does not indicate that a first element, component, region, layer or part necessarily presents in the present disclosure.

The spatially relative terms such as "beneath", "below", "lower", "under", "above", "on", etc., may be used herein for ease of description to describe one element or feature's relationship to another element(s) or feature(s) as illustrated in the figures. It will be understood that the spatially relative terms are intended to encompass different orientations of the device in use or operations in addition to the orientation depicted in the figures. For example, if the device in the appended drawings is turned over, an element or a feature described as "below" or "beneath" or "under" another element or feature would then be oriented "above" the another element or feature. Thus, example terms "below" and "under" may encompass both directions of up and down. A device may be otherwise oriented (rotated 90 degrees or at other orientations) and the spatially relative descriptors used herein should be interpreted accordingly.

A term used herein is for the purpose of describing a particular example only and is not to be considered as limitation of the present disclosure. As used herein, the singular forms "a", "an" and "said/the" are intended to include the plural forms as well, unless the context clearly dictates otherwise. It should also be understood that the terms "consists of" and/or "including", when used in this description, identify the presence of stated features, integers, operations, operations, elements and/or parts, but do not exclude the presence or addition of one or more other features, integers, operations, operations, elements, parts and/or groups. As used herein, the term "and/or" includes any and all combinations of the associated listed items.

In order to understand the characteristics and technical content of examples of the present disclosure in more detail, examples of the present disclosure will be described in detail below in conjunction with the accompanying drawings, however, the accompanying drawings are for reference and description only, and are not intended to limit examples of the present disclosure.

Memory devices in examples of the present disclosure include but are not limited to a three-dimensional NAND memory, and for ease of understanding, a three-dimensional NAND memory is used as an example for illustration.

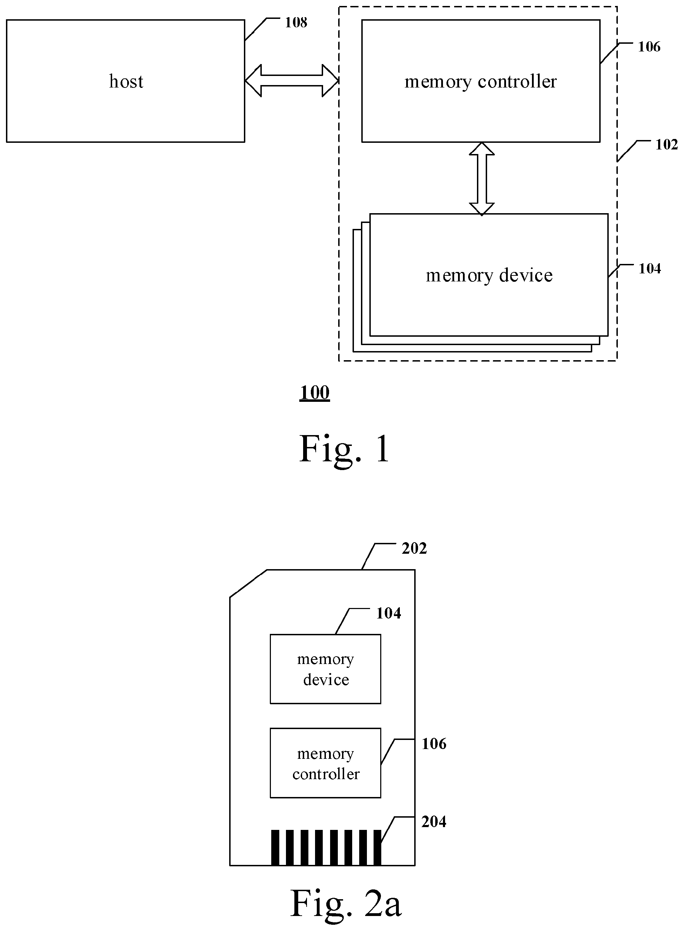

FIG.1 illustrates a block diagram of an example system 100 with memory devices in accordance with some aspects of the present disclosure. The system 100 may be a mobile phone, a desktop computer, a laptop computer, a tablet, a vehicle computer, a gaming console, a printer, a positioning device, a wearable electronic device, a smart sensor, a virtual reality (VR) device, an argument reality (AR) device, or any other suitable electronic devices having memory device therein. As shown in in FIG.1, system 100 may include a host 108 and a memory system 102, and the memory system 102 has one or more memory devices 104 and a memory controller 106. The host 108 may be a processor of an electronic device (e.g., a central processing unit (CPU)) or a system on chip (SoC) (e.g., an application processor (AP)). Host 108 may be configured to send data to or receive data from memory device 104.

According to some examples, memory controller 106 is coupled to memory device 104 and host 108 and is configured to control memory device 104. Memory controller 106 may manage data stored in memory device 104 and communicate with host 108. In some examples, memory controller 106 is designed to operate in low duty cycle environments, e.g., Secure Digital (SD) card, Compact Flash (CF) card, Universal Serial Bus (USB) flash drive, or other media for use in electronic devices such as personal computer, digital camera, mobile phone, etc. In some examples, the memory controller 106 is designed to operate in high duty cycle environment solid state drive or embedded multimedia card (eMMC), where SSDs or eMMCs are used as data storage for mobile devices such as smartphone, tablet computer, laptop computer, and enterprise storage array.

Memory controller 106 may be configured to control operations of memory device 104, e.g., read, erase and program operations. Memory controller 106 may also be configured to manage various functions related to data stored or to be stored in memory device 104, including but not limited to bad block management, garbage collection, logical-to-physical address translation, wear leveling, etc. In some examples, memory controller 106 is also configured to process error correction code (ECC) related to data read from or written to memory device 104. Memory controller 106 may also perform any other suitable functions, e.g., formatting memory device 104. Memory controller 106 may communicate with a host (e.g., host 108 ) according to a particular communication protocol. For example, the memory controller 106 may communicate with a host through at least one of various interface protocols, e.g., USB protocol, MMC protocol, Peripheral Component Interconnect (PCI) protocol, PCI Express (PCI-E) protocol, advanced Technology Attachment (ATA) protocol, Serial ATA protocol, Parallel ATA protocol, Small Computer Small Interface (SCSI) protocol, Enhanced Small Disk Interface (ESDI) protocol, Integrated Drive Electronics (IDE) protocol, Firewire protocol, etc.

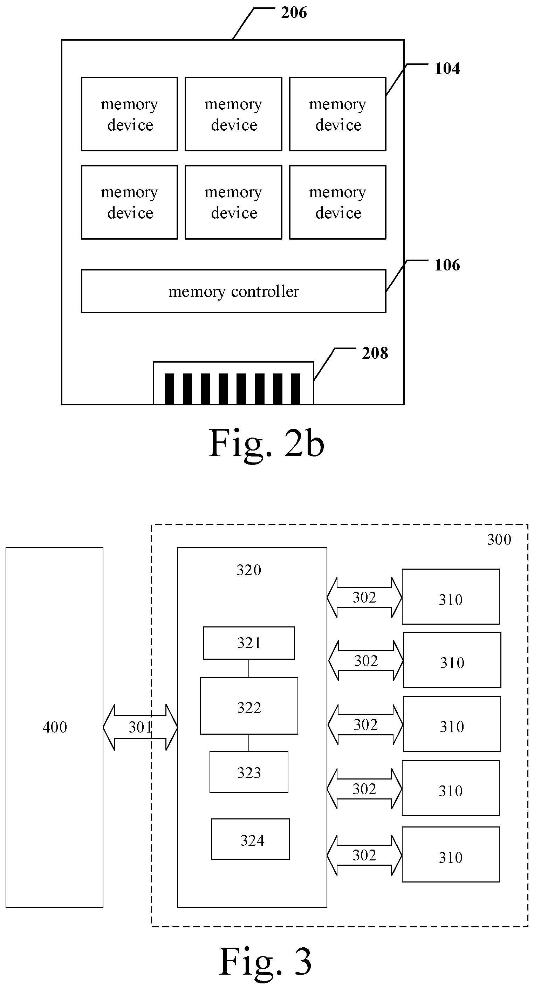

Memory controller 106 and one or more memory devices 104 may be integrated into various types of storage devices, e.g., included in the same package (e.g., Universal Flash Storage package or eMMC package). That is, memory system 102 may be implemented and packaged into different types of end electronic products. In one example as shown in FIG 2a, memory controller 106 and a single memory device 104 may be integrated into a memory card 202. Memory card 202 may include a PC card (PCMCIA, personal computer memory card international association), a CF card, a smart media (SM) card, a memory stick, a multimedia card (MMC, RS-MMC, MMCmicro), an SD card (SD, miniSD, microSD, SDHC), a UFS, etc. Memory card 202 may further include a memory card connector 24 coupling memory card 202 with a host (e.g., host 108 in FIG 1). In another example as shown in FIG.2b, memory controller 106 and multiple memory devices 104 may be integrated into a SSD 206. SSD 206 may further include an SSD connector 208 coupling the SSD 206 with a host (e.g., host 108 in FIG. 1). In some examples, the at least one of the storage capacity or operating speed of SSD 206 is greater than at least one of the storage capacity or operating speed of memory card 202.

In some examples, as shown in FIG.3, the memory system 300 uses a non-volatile memory device 310 (such as a NAND memory) to store user data and a Logical-to-Physical Mapping Table (L2P Mapping Table) corresponding to user data. When data is being read, a portion of the above L2P mapping table will be loaded into the buffer 321 of the memory controller 320, and the memory controller 320 uses the logical address provided by the host 400 and utilizes the portion of the L2P mapping table loaded in the buffer 321 to search a physical address in the memory device 310, and then read the corresponding data in the memory device 310 with the searched physical address. In some examples, the buffer 321 in the memory controller 320 includes, but is not limited to, a Static Random Access Memory (SRAM), a Dynamic Random Access Memory (DRAM), etc.

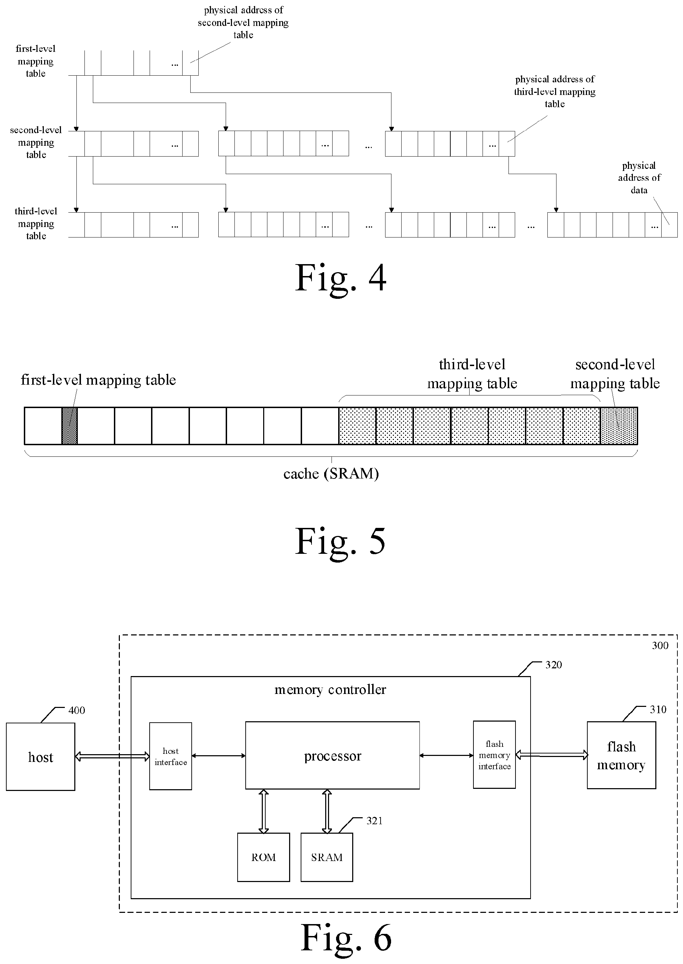

Several methods may be applied for storing and maintaining the L2P mapping table. One method is single-level direct L2P mapping, which may contain mapping information for data in an entire memory device. Therefore, the single-level direct page mapping scheme requires a large quantity of storage space (1GB of data corresponds to the order of storing an L2P mapping table of 1-2MB) to store the L2P mapping table, which is a challenge for a large-capacity memory device. Another method for storing and maintaining a L2P mapping table is a multi-level mapping scheme, here, a three-level mapping scheme is taken as an example for illustration, as shown in FIG.4, the physical address of a second-level mapping table is stored in a first-level mapping table, and each item of mapping in the first-level mapping table directs to a second-level mapping table; the physical address of a third-level mapping table is stored in a second-level mapping table, and each item of mapping in the second-level mapping table directs to a third-level mapping table; the physical address of data (such as physical block number, physical page number, etc.) is stored in the third-level mapping table, and each item of mapping in the third-level mapping table directs to a physical block or a physical page in a memory device. In some examples, for a memory device with a data storage capacity of 128G, the corresponding third-level mapping table has a size of 128M, the corresponding second-level mapping table has a size of 128K, and the corresponding first-level mapping table has a size of 128Byte.

A Flash Translation Layer (FTL) 322 may be located in the memory controller 320 and is configured to translate a logical address into a physical address. Due to the limited capacity of the buffer 321 in the memory controller 320, under the multi-level mapping scheme, it is impossible to load all of the multi-level mapping tables into the buffer 321, therefore, the whole first-level mapping table may be loaded into the buffer 321, i.e., the first-level mapping table is resident in the buffer 321, while the second-level mapping table and the third-level mapping table may be partially loaded into the buffer 321. It may be understood that if the flash translation layer 322 is not able to obtain the mapping information required for data reading from the current buffer 32, at least one of the second-level mapping table or the third-level mapping table stored in the buffer 321 is required to be updated, i.e., reload at least one of a portion of the second-level mapping table or a portion of the third-level mapping table from the memory device 310 into the buffer 321 until the required mapping information is found. It is should be noted that, for sequential reading, the mapping information is continuous, thus the performance for sequential reading in the multi-level mapping scheme is better; and for random reading, the mapping information is scattered, thus a plurality of read operations to the memory device 310 may be additionally added to update at least one of the second-level mapping table or the third-level mapping table in the buffer 321, so as to find the mapping information required for random reading, therefore, the performance for the random reading in the multi-level mapping scheme is relatively poor. Here, the read delay of the buffer 321 may be on the order of several microseconds, while the read delay of the memory device 310 may be on a greater order, e.g., tens of microseconds.

In some examples, the memory system 300 may be a DRAM-less memory system, i.e., no DRAM is included, e.g., the memory system 300 may be UFS, and the buffer 321 in the memory system 300 may be an SRAM. The fixed capacity in the SRAM may be divided through a method of static allocation to store the multi-level mapping table, and the maintaining SRAM capacity is used as the buffer space used by other task scheduling of a firmware (FW), where the firmware may be stored in the storage medium of the memory device 310 and executed by the control component 323 (such as a processor) in the memory controller 320.

Taking a memory device with a data storage capacity of 128G as an example, as shown in FIG.5, the total capacity of the SRAM in the memory controller may be 2M, and the SRAM may store a first-level mapping table of 128Byte (i.e., the whole first-level mapping tables in the memory device), a second-level mapping table of 8K, and a third-level mapping table of 256K, such that it may be ensured that random read operation in the range of 8G will not update the second-level mapping table stored in the SRAM. In order to implement a random read operation within 1G without updating the third-level mapping table stored in SRAM, i.e., to achieve a 100% buffer hit rate of mapping table, the capacity for storing the third-level mapping table in the SRAM may be expanded from 256K to 1024K. However, on the basis that the capacities for storing the second-level mapping table and the third-level mapping table in the SRAM are 8K and 1024K respectively, if a random read operation for a large range occurs, additional times of table lookup will be performed, which seriously reduces the performance of a random read for a large range. Taking 1000 random reads within the range of 128G (i.e. full-disk random read) as an example, as shown in Table 1, the ratio of random read commands, the number of reads for additionally loading the second-level mapping table, and the number of reads for additionally loading the third-level mapping table is almost 1:1:1, 1000 random read commands will result in a total of 2931 reads, and the additional 1931 times of reads will seriously affect the performance of the memory system.

It will be understood that buffer space of a memory controller is limited, and a random read for a large range, if the buffer space of the third-level mapping table continues to be increased, the efficiency of the firmware when performing other tasks will be reduced; while if the buffer space of the second-level mapping table and the third-level mapping table is not increased, additional times of reads for loading the mapping table will be increased, and the time overhead for random read will increase, resulting in poor performance of random reading.

**Table 1**

| Actual read times of 1000 random read commands within 128G range | | |
|---|---|---|
| | The capacity for the third-level mapping table in SRAM is 1024K (Not updated within 1G range) | The capacity for the second-level mapping table in SRAM is 8K (Not updated within 8G range) |
| Buffer hit rate | 1/128 | 8/128 |
| Buffer miss rate | 1-1/128 | 1-8/128 |
| The number of reads to additionally load the mapping table | 993 | 938 |
| Total number of reads | 938+993+1000=2931 | |

Referring to FIG.3, an example of the present disclosure provides a memory system 300, the memory system 300 includes: at least one non-volatile memory device 310 and a memory controller 320 coupled to the at least one non-volatile memory device 310; wherein, a multi-level mapping table is stored in the memory device 310, and the multi-level mapping table is to implement mapping from a logical address to a physical address; the memory controller 320 includes a buffer 321, and a portion of the multi-level mapping table is stored in the buffer 321; the memory controller 320 is configured to: perform a random read operation on the data stored in the memory device 310; in response to the random read range corresponding to the random read operation meeting a preset condition, adjust the capacity for storing different levels of mapping tables in the buffer 321.

In an example of the present disclosure, the memory controller 320 may be connected to at least one memory device 310. The memory controller 320 communicates with the host 400 through the host interface 301. The host 400 may send at least one of commands or data through the host interface 301 to request the memory controller 320 to perform read, program and erase operations of the memory device 310. Memory controller 320 may be configured to retrieve data from one or more memory devices 310 and send the data to host 400 via data bus. The memory device 310 may include one or more memory cell arrays of NAND flash memory, and the storage medium of the memory device 310 may store executable instructions, such as a firmware in an example described above. The memory controller 320 may include one or more buffers 321, the buffers 321 may be high-speed buffers (such as SRAM), and the buffers 321 may be applied for storing any suitable information including L2P mapping tables, software codes, commands, and firmware, so that the memory controller 320 may quickly execute various commands and operations. In some examples, as shown in FIG.6, the memory device 310 may be a flash memory, and the buffer 321 may be an SRAM. The memory controller 320 includes a processor, and the processor is connected to the host 400 through a host interface, and connected to the memory device 310 through a flash memory interface. The processor is also connected to the buffer 321 and may obtain L2P mapping information from the buffer 321.

The memory device 310 stores a multi-level L2P mapping table, and the multi-level mapping table may indicate mapping from a logical address to a physical address corresponding to the data stored in the memory device 310. When data is being read, a portion of multi-level mapping table will be loaded from the memory device 310 into the buffer 321, and the memory controller 320 uses the logical address provided by the host 400 and utilizes the portion of the L2P mapping table loaded in the buffer 321 to search a physical address in the memory device 310, and then read the corresponding data in the memory device 310 with the searched physical address.

In some examples, the memory controller 320 is configured to perform a random read operation on data stored in the memory device 310 in response to a read command from the host 400. The memory controller 320 detects the random read range with firmware stored in the memory device 310. When the random read range meets the preset condition (e.g., the random read range is greater than a certain value), the memory controller 320 adjusts the capacity for storing the various levels of mapping tables in the buffer 321.

Taking the three-level mapping scheme as an example, it is possible to increase the capacity for the second-level mapping table and reduce the capacity for the third-level mapping table while maintaining the total capacity for the second-level mapping table and the third-level mapping table being unchanged (to adjust the capacity ratio of the second-level mapping table and the third-level mapping table); it is also possible to increase the capacity for the second-level mapping table and the capacity for the third-level mapping table at the same time, or increase the capacity for one of the second-level mapping table and the third-level mapping table (the total capacity for the second-level mapping table and the third-level mapping table increases). When the random read range does not meet the preset condition, the memory controller 320 does not adjust the capacity for storing the various levels of mapping tables in the buffer 321.

The memory controller 320 sends a mapping table loading instruction to receive an adjusted multi-level mapping table with corresponding capacity from the memory device 310, and load it into the buffer 321, the load command here may contain the capacity information of the adjusted various levels of mapping tables, and the larger is the capacity for storing the various levels of mapping tables in the buffer 321, the more mapping information is obtained from the memory device 310 in one load. Thereafter, the memory controller 320 may search the corresponding physical address of the memory device 310 according to the logical address provided by the host 400 and through the portion of multi-level mapping table loaded in the buffer 321, and then read the corresponding data in the memory device 310 with the searched physical address.

It should be noted that an example of the present disclosure may also include a mapping scheme of more than three levels, such as a mapping scheme of four or more levels, which is not limited here. It will be understood that when the memory system includes more than four levels of mapping schemes, adjustment objects may be correspondingly adjusted according to the actual situation, e.g., when the memory system includes four levels, the capacity for the second-level mapping table, the third-level mapping table and the fourth-level mapping table may be adjusted, and the capacity for the third-level mapping table and the fourth-level mapping table may also be adjusted. The specific adjustment scheme may be adjusted according to the mapping strategy.

In some examples, when the random read range is less than a certain value, the memory controller 320 may also reduce the capacity for storing different levels of mapping tables in the buffer 321 (such as reducing the capacity for at least one of the second-level mapping table or the third-level mapping table) to allocate additional buffer capacity for performing other tasks of the firmware to improve utilization of the buffer. It will be understood that, in scenarios such as a sequential read operation or a random read operation for a small range, the memory controller 320 may not adjust the capacity for storing various levels of mapping tables in the buffer 321.

In this way, in one aspect, when a random read operation for a large range is performed, the memory controller 320 may increase the capacity for storing at least one of levels of the mapping table (such as increasing the capacity for the second level of the mapping table) in the buffer 321, so as to improve the buffer hit rate of mapping table, thereby the times of updating the mapping table from the memory device 310 to the buffer 321 is reduced, the time overhead for searching the corresponding mapping table is reduced, and the performance of a random read for a large range in the memory system 300 is improved; in another aspect, dynamically adjusting the capacity for storing different levels of mapping tables in the buffer 321 may improve utilization of the buffer 321 and have little impact on other task scheduling, thus reduces problems such as buffer resource competition.

In some examples, the memory system 300 includes a DRAM-less memory system, and the buffer 321 includes a static random access memory.

In an example of the present disclosure, the memory system 300 may not include a DRAM, i.e., a DRAM-less memory system. In some examples, the buffer 321 in the memory controller 320 may adopt SRAM instead of DRAM, and compared with DRAM, SRAM has higher access speed and lower power consumption, which is beneficial to improve the performance of the memory system 300.

In some examples, the memory system 300 includes a flash storage, and the memory device 310 includes a NAND memory.

In an example of the present disclosure, the memory system 300 may be a UFS, and the memory device 310 therein may include a NAND memory. UFS has the characteristics of small size, high performance and low power consumption, which is convenient for application in embedded devices and mobile devices. Compared with NOR flash memory, NAND flash memory has higher storage density, higher erasable times and lower cost per bit. In some examples, the memory system 300 may also include an SSD, an SD card, a CF card, etc.

In some examples, the multi-level mapping table includes a first-level mapping table, a second-level mapping table, ......, Nth-level mapping table, where N is an integer greater than or equal to three, the physical address of the next-level mapping table is stored in the previous-level mapping table, and the physical address of data is stored in the last-level mapping table, the buffer stores at least the whole first M levels of mapping table (M is greater than or equal to 1 and less than N) and a portion of each of levels of mapping tables in the subsequent N-M level mapping tables. In some specific examples, as shown in FIG.4, the multi-level mapping table includes a first-level mapping table, a second-level mapping table, and a third-level mapping table, a physical address of the second-level mapping table is stored in the first-level mapping table, a physical address of the third-level mapping table is stored in the second-level mapping table, a physical address of data is stored in the third-level mapping table, the whole first-level mapping table, a portion of the second-level mapping table and a portion of the third-level mapping table are stored in the buffer.

In the example of the present disclosure, since the capacity occupied by the first-level mapping table is small (e.g., the size of the first-level mapping table corresponding to a memory device with a storage capacity of 128G is only 128Byte), thus the whole first-level mapping table may be loaded into the buffer, while the second-level mapping table and the third-level mapping table in the memory device are partially loaded into the buffer, so as to reduce problems such as resource competition in the buffer.

For ease of understanding, the following multi-level mapping tables are described by taking the three-level mapping table described above as an example. In some examples, the memory controller 320 is configured to: in response to the random read range being greater than or equal to a preset value, increase the ratio of the capacity for storing the second-level mapping table to the total capacity for storing the second-level mapping table and the third-level mapping table in the buffer 321.

In an example of the present disclosure, the memory controller 320 may detect the random read range with firmware stored in the memory device 310, and when the random read range is greater than a preset value, increasing the ratio of the capacity for storing the second-level mapping table to the total capacity for storing the second-level mapping table and the third-level mapping table in the buffer 321. That is to say, here the memory controller 320 may not increase the total capacity for storing the second-level mapping table and the third-level mapping table in the buffer 321, but on the premise of maintaining the total capacity for the second-level mapping table and the third-level mapping table in the buffer 321 being unchanged, increase the capacity for the second-level mapping table and decrease the capacity for the third-level mapping table.

In some examples, as shown in Table 2, taking 1000 random reads in the range of 128G (the storage data capacity of the memory device is 128G, e.g., full disk random read) as an example, compared with the example corresponding to Table 1, the memory controller reduces the capacity for the third-level mapping table in the buffer from 1024K to 904K, and allocates the reduced 120K capacity for the third-level mapping table to the second-level mapping table, i.e., the capacity for the second-level mapping table in the buffer is increased from the original 8K to 128K. In this way, it may be guaranteed that the random read within the range of 128G does not update the second-level mapping table loaded in the buffer, i.e., the read times for additionally loading the second-level mapping table is 0, and the increase of read times for additionally loading the third-level mapping table is small, and finally the total read times is reduced from 2931 to 1994, which greatly improves the random read performance of the memory system.

**Table 2**

| Adjusted actual read times of 1000 random read commands within 128G range | | |
|---|---|---|
| | The capacity for the third-level mapping table in buffer is 904K | The capacity for the second-level mapping table in buffer is 128K |
| Buffer hit rate | 904/(1024×128) | 128/128 |
| Buffer miss rate | 904/(1024×128) | 1-128/128 |
| The number of reads to additionally load the mapping table | 994 | 0 |
| Total number of reads | 994+0+1000=1994 | |

In some examples, the memory controller 320 is configured to: in response to the random read range being greater than or equal to a preset value, obtain a target buffer hit rate of mapping table; detect the current buffer hit rate of mapping table; in response to the current buffer hit rate of mapping table being lower than the target buffer hit rate of mapping table, increase the ratio of the capacity for storing the second-level mapping table to the total capacity for storing the second-level mapping table and the third-level mapping table in the buffer 321 until the current buffer hit rate of mapping table is greater than or equal to the target buffer hit rate of mapping table.

In some examples, the memory controller 320 is configured to: determine the target buffer hit rate of mapping table according to the random read range.

In some examples, the memory controller 320 is configured to: in response to the random read range being less than the preset value, maintain the capacity for storing the second-level mapping table and the capacity for storing the third-level mapping table in the buffer 321 being unchanged.

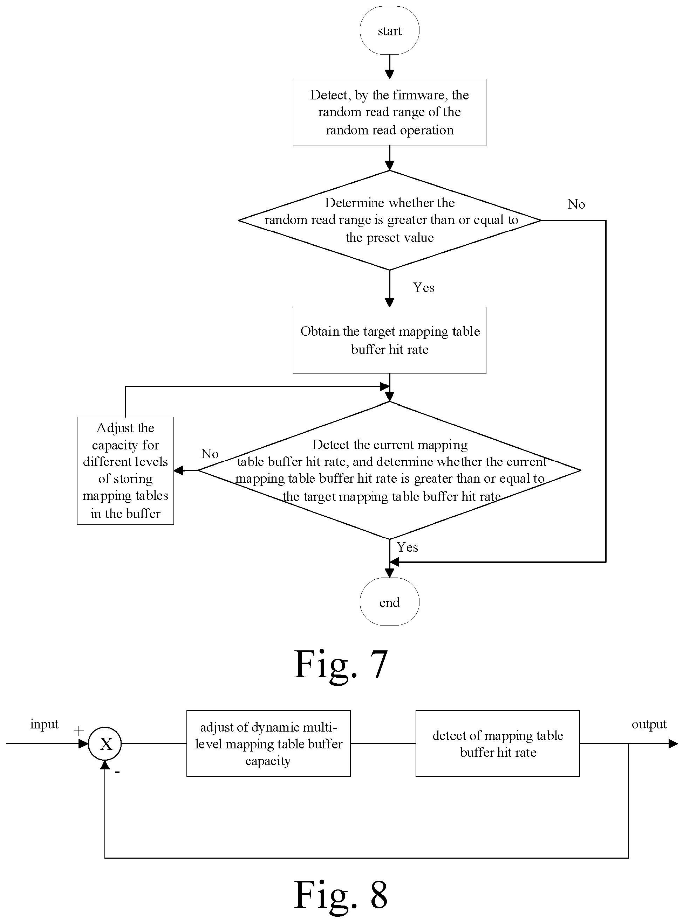

In an example of the present disclosure, referring to FIG.7, the memory controller 320 may detect the random read range with firmware stored in the memory device 310. When the random read range is greater than or equal to a preset value, the memory controller 320 may calculate the target buffer hit rate of mapping table according to the random read range and through firmware. The memory controller 320 may detect the current buffer hit rate of mapping table. When the current buffer hit rate of mapping table is lower than the target buffer hit rate of mapping table, the memory controller 320 adjusts the capacity for storing the second-level mapping table and the capacity for storing the third-level mapping table in the buffer 321. When the current buffer hit rate of mapping table is greater than or equal to the target buffer hit rate of mapping table, the memory controller 320 stops adjusting the capacity for storing different levels of mapping tables in the buffer 321. In addition, if the random read range is smaller than the preset value, the memory controller 320 may maintain the capacity for storing the second-level mapping table and the third-level mapping table in the buffer 321 being unchanged.

In this way, the memory controller 320 may adjust the capacity for storing the second-level mapping table and the capacity for storing the third-level mapping table in the buffer 321 multiple times until the current buffer hit rate of mapping table is greater than or equal to the target buffer hit rate of mapping table. Through dynamically adjusting the capacities of different levels of mapping tables in the buffer 321 multiple times, the target buffer hit rate of mapping table may be accurately achieved without exceeding the target buffer hit rate of mapping table too much, so that the limited buffer resources may be fully utilized and competition for buffer resources is reduced while performance of a random read for the large range in the memory system is improved.

In some examples, the memory controller 320 is configured to: in response to the random read range being greater than or equal to a preset value, increase the total capacity for storing the second-level mapping table and the third-level mapping table in the buffer 321.

In an example of the present disclosure, when the random read range is greater than or equal to the preset value, the ways for the memory controller 320 adjusting the capacity for storing the second-level mapping table and the capacity for storing the third-level mapping table in the buffer 321 includes but is not limited to the following: one way is that the memory controller 320, on the premise of maintaining the total capacity for the second-level mapping table and the third-level mapping table in the buffer 321 being unchanged, increases the capacity for the second-level mapping table and decrease the capacity for the third-level mapping table; another way is that the memory controller 320 increases the capacity for at least one of the second-level mapping table and the third-level mapping table in the buffer 321, so that the total capacity for the second-level mapping table and the third-level mapping table increases. Here, increasing the total capacity for storing the second-level mapping table and the third-level mapping table in the buffer 321 may also be implemented through increasing the capacity for one of the second-level mapping table and the third-level mapping table and decreasing the capacity for the other.

It may be understood that increasing the total capacity for storing the second-level mapping table and the third-level mapping table in the buffer 321 may further improve the buffer hit rate of mapping table, to improve the performance of a random read for a larger range in the memory system.

In some examples, the memory controller 320 is configured to: determine the difference between the current buffer hit rate of mapping table and the target buffer hit rate of mapping table; according to the difference, determine increasing quantity of the capacity for storing the second-level mapping table in the buffer 321 in this adjustment; wherein the increasing quantity is positively correlated with the difference.

In an example of the present disclosure, the memory controller 320 may calculate the target buffer hit rate of mapping table with the firmware stored in the memory device 310 and according to the random read range, thereby calculating the difference between the current buffer hit rate of mapping table and the target buffer hit rate of mapping table; then the memory controller 320 may determine the increasing quantity of the capacity for storing the second-level mapping table in the buffer 321 in this adjustment according to the difference, and the larger is the difference, the greater is the increasing quantity in the capacity for the second-level mapping table in this adjustment; the smaller is the difference, the smaller is the increasing quantity in the capacity for the second-level mapping table in this adjustment.

In this way, in the case of a large difference, the increasing quantity in this adjustment is large (i.e., the single adjustment amplitude is large), thereby reducing the times of adjustments of the capacity for the multi-level mapping table in the buffer 321 for the purpose of achieving the target buffer hit rate of mapping table, and accelerating the adjustment of the mapping table buffer capacity, to improve the performance of the memory system; in the case of a small difference, the increasing quantity in this adjustment is small to accurately achieve the target buffer hit rate of mapping table, so that the limited buffer resources may be fully utilized.

In some examples, the memory controller 320 is configured to: in response to the current buffer hit rate of mapping table being lower than the target buffer hit rate of mapping table, and the ratio of the current capacity for storing the second-level mapping table in the buffer 321 to the total capacity for storing the second-level mapping table and the third-level mapping table reaching a preset ratio, stop adjusting the capacity for storing different levels of mapping tables in the buffer 321.

In an example of the present disclosure, the memory controller 320 may also set a preset ratio, i.e., the threshold of the ratio of the current capacity for storing the second-level mapping table in the buffer 321 to the total capacity for storing the second-level mapping table and the third-level mapping table. In the case that the current buffer hit rate of mapping table is still less than the target buffer hit rate of mapping table and the capacity ratio of the second-level mapping table in the buffer 321 reaches a preset ratio, the memory controller 320 may stop adjusting the capacity for storing different levels of mapping tables in the buffer 321. In this way, the capacity for the second-level mapping table in the buffer 321 will not be too large, thereby preventing the buffer resources required by the third-level mapping table from being occupied. The foregoing preset ratio may be determined according to a proportional relationship between the capacity for the whole second-level mapping table and the capacity for the whole third-level mapping table in the memory device 310.

As shown in FIG.8, one example of examples in the present disclosure includes a negative feedback dynamic adjustment mechanism based on the current buffer hit rate of mapping table. The input is the target buffer hit rate of mapping table *Y_In* of the second-level mapping table and the third-level mapping table, and the output is the current buffer hit rate of mapping table *Y_out* of the second-level mapping table and the third-level mapping table, and X represents the comparison node of *Y_In* and *Y_out.* On the basis of the current dynamic L2P mapping table buffer algorithm, according to the following formula: *Y _out=*(*Y _In-Y_out*), wherein K is an adjustment coefficient, the current buffer hit rate of mapping table may be dynamically adjusted to achieve the target buffer hit rate of mapping table, thereby improving the performance of a random read for a large range in the memory system.

In some examples, the memory controller 320 is configured to: determine the preset value according to the current capacity for storing the second-level mapping table in the buffer 321 and in combination with mapping rules for various levels of mapping tables.

In an example of the present disclosure, the memory controller 320 may calculate the preset value corresponding to the random read range with the firmware stored in the memory device 310, and according to the capacity for storing the second-level mapping table in the current buffer 321 and the mapping rules for various levels of mapping tables. Here, the mapping rule may refer to the proportional relationship for capacity between the mapping tables of adjacent levels, and between the data stored in the memory device and the lowest level mapping table.

In some examples, taking the three-level mapping scheme as an example, the mapping rule may be that the size of the third-level mapping table is 1/1024 of the data storage capacity in the corresponding memory device, the size of the second-level mapping table is 1/1024 of the size of the corresponding third-level mapping table, and the size of the first-level mapping table is 1/1024 of the size of the corresponding second-level mapping table. That is to say, if the capacity for storing the second-level mapping table in the buffer 321 is 8K, then it may be guaranteed that the random read within the range of 8G does not update the second-level mapping table in the buffer 321, i.e., the preset value may be set to 8G at this point, and when the random read range exceeds 8G, additional read times will be performed to reload the second-level mapping table from the memory device, at this point, the capacity for storing the multi-level mapping table in the buffer 321 may be adjusted to improve the random read performance of the memory system.

In some examples, the multi-level mapping table includes a first-level mapping table and a second-level mapping table, a physical address of the second-level mapping table is stored in the first-level mapping table, a physical address of data is stored in the second-level mapping table, a portion of the first-level mapping table and a portion of the second-level mapping table are stored in the buffer 321; the memory controller 320 is configured to: in response to the random read range being greater than or equal to a preset value, increase the ratio of the capacity for storing the first-level mapping table to the total capacity for storing the first-level mapping table and the second-level mapping table in the buffer 321.

In an example of the present disclosure, the multi-level mapping table may also be two-level, i.e., it only includes a first-level mapping table and a second-level mapping table. In this way, when the random read range is greater than or equal to the preset value, the memory controller 320 may increase the ratio of the capacity for storing the first-level mapping table to the total capacity for storing the first-level mapping table and the second-level mapping table in the buffer 321, so as to improve the buffer hit rate of mapping table, thereby the times of updating the mapping table from the memory device 310 to the buffer 321 is reduced, the time overhead for searching the corresponding mapping table is reduced, and the performance of a random read for a large range in the memory system 300 is improved.

Referring to FIG.3, an example of the present disclosure provides a memory controller 320, including: a buffer 321 and a control component 323, wherein, the buffer 321 is configured to store a portion of a multi-level mapping table in the memory device 310; and the multi-level mapping table is configured to implement mapping from a logical address to a physical address; the control component 323 is configured to: perform a random read operation on the data stored in the memory device 310; in response to the random read range corresponding to the random read operation meeting a preset condition, adjust the capacity for storing different levels of mapping tables in the buffer 321.

In some examples, the memory controller 320 further includes: a flash translation layer 322, connecting the control component 323 and the buffer 321; the flash translation layer 322 is configured to translate the logical address into a corresponding physical address according to the mapping information in the multi-level mapping table stored in the buffer 321.

In some examples, the control component 323 is further configured to: receive instructions from a host 400 to perform read, write and erase operations on the memory device 310; the buffer 321 is further configured to temporarily store data transferred between the host 400 and the memory device 310; the memory controller 320 further includes: an encoder/decoder 324 for encoding and decoding data transferred between the host 400 and the memory device 310.

In an example of the present disclosure, the memory controller 320 may include a buffer 321, a flash translation layer 322, a control component 323 and an encoder/decoder 324.

The memory controller 320 may include one or more buffers 321, the buffers 321 may include high-speed buffers (such as SRAM), and the buffers 321 may be applied for storing any suitable information including L2P mapping tables, software codes, commands, and firmware, so that the memory controller 320 may quickly execute various commands and operations. The flash translation layer 322 may be implemented with the allocation portion and control software of the memory controller 320 circuitry, and is configured to translate a logical address into a physical address.

The control component 323 may include any suitable integrated circuit (e.g., one or more processors), which is configured to receive instructions from the host 400 through the host interface 301 and communicate at least one of commands or data with one or more memory devices 310 via the interface 302 to perform read, program and erase operations of the memory devices 310. For example, the control component 323 receives a request to access the flash memory medium from the host 400. The control component 323 may also be configured to communicate with other components of the memory controller 320 and control these components. For example, the control component 323 may instruct the flash translation layer 322 to scan the buffer 321 to obtain mapping information, and send/receive address mapping information from the flash translation layer 322. The control component 323 may also communicate with the encoder/decoder 324 and other suitable components of the memory controller 320.

Encoder/decoder 324 may provide encoding and decoding of data processed by memory controller 320. The encoder/decoder 324 may also generate and store error correction code (ECC) and metadata, and the encoder/decoder 324 may be configured to detect and correct errors in data stored by the memory device.

In some examples, the multi-level mapping table includes a first-level mapping table, a second-level mapping table, and a third-level mapping table, a physical address of the second-level mapping table is stored in the first-level mapping table, a physical address of the third-level mapping table is stored in the second-level mapping table, a physical address of data is stored in the third-level mapping table, the whole first-level mapping table, a portion of the second-level mapping table and a portion of the third-level mapping table are stored in the buffer 321; the control component 323 is configured to: when the random read range is greater than or equal to a preset value, increase the ratio of the capacity for storing the second-level mapping table to the total capacity for storing the second-level mapping table and the third-level mapping table in the buffer 321.

In some examples, the memory control 323 is configured to: when the random read range being greater than or equal to a preset value, obtain a target buffer hit rate of mapping table; detect the current buffer hit rate of mapping table; when the current buffer hit rate of mapping table being lower than the target buffer hit rate of mapping table, increase the ratio of the capacity for storing the second-level mapping table to the total capacity for storing the second-level mapping table and the third-level mapping table in the buffer 321 until the current buffer hit rate of mapping table is greater than or equal to the target buffer hit rate of mapping table.

In some examples, the memory control 323 is configured to: determine the difference between the current buffer hit rate of mapping table and the target buffer hit rate of mapping table; according to the difference, determine increasing quantity of the capacity for storing the second-level mapping table in the buffer 321 in this adjustment; wherein the increasing quantity is positively correlated with the difference.

In some examples, the memory control 323 is configured to: when the current buffer hit rate of mapping table being lower than the target buffer hit rate of mapping table, and when the ratio of the current capacity for storing the second-level mapping table to the total capacity for storing the second-level mapping table and the third-level mapping table in the buffer 321reaching a preset ratio, stop adjusting the capacity for storing different levels of mapping tables in the buffer 321.

In some examples, the memory control 323 is configured to: determine the target buffer hit rate of mapping table according to the random read range.

In some examples, the memory control 323 is configured to: when the random read range being less than the preset value, maintain the capacity for storing the second-level mapping table and the capacity for storing the third-level mapping table in the buffer 321 being unchanged.

In some examples, the memory control 323 is configured to: determine the preset value according to the current capacity for storing the second-level mapping table in the buffer 321 and in combination with mapping rules for various levels of mapping tables.

In some examples, the memory control 323 is configured to: when the random read range being greater than or equal to a preset value, increase the total capacity for storing the second-level mapping table and the third-level mapping table in the buffer 321.

Referring to FIG.3, an example of the present disclosure further provides another memory system, the memory system 300 includes: at least one non-volatile memory device 310 and a memory controller 320 coupled to the at least one non-volatile memory device 310; wherein, a multi-level mapping table is stored in the memory device 310, and the multi-level mapping table is to implement mapping from a logical address to a physical address; the memory controller 320 includes a buffer 321, and a portion of the multi-level mapping table is stored in the buffer 321; the memory controller 320 is configured to: perform a random read operation on the data stored in the memory device 310; in response to the random read range corresponding to the random read operation meeting a preset condition, adjust the quantity of the capacity for different levels of mapping tables in one loading from the memory device 310 to the buffer 321.

In the example of the present disclosure, the memory controller 320 is configured to issue a mapping table load command when the random read range meets a preset condition (e.g., the random read range is greater than a certain value), and adjust the quantity of the capacity for different levels of mapping tables in one loading from the memory device 310 to the buffer 321, where "one loading" refers to one read operation of the mapping table.

Taking the three-level mapping scheme as an example, the memory controller 320 may increase the ratio of the capacity for the second-level mapping table to the total capacity for the second-level mapping table and the third-level mapping table in one loading of the mapping table without increasing the total capacity for the second-level mapping table and the third-level mapping table in one loading. In this way, the capacity for storing the second-level mapping table in the buffer 321 increases, but the total capacity for storing the multi-level mapping table in the buffer 321 does not change, thereby the buffer hit rate of mapping table is improved, the times of additionally loading the mapping table from the memory device 310 to the buffer 321 is reduced, the time overhead for searching the corresponding mapping table is reduced, and the performance of a random read for a large range in the memory system 300 is improved. In addition, dynamically adjusting the quantity of the capacity for different levels of mapping tables in one loading from the memory device 310 to the buffer 321 may improve the utilization of the buffer 321 and have little impact on other task scheduling, thereby reducing problems such as buffer resource competition.

It may be understood that, in the case that there is at least one random read operation among multiple random read operations for which the random read range meets the preset condition, since the memory controller 320 adjusts the quantity of the capacity for different levels of mapping tables in one loading from the memory device 310 to the buffer 321, therefore, the capacity for the second-level mapping table loaded by at least one random read operation is different from the capacity for the second-level mapping table loaded by other random read operations (here it may also be that the capacity for the third-level mapping table loaded by at least one random read operation is different from that of other times).

In some examples, the memory controller 320 may load the multi-level mapping table corresponding to the random read operation into the buffer 321 within a preset number of times of reads, i.e., it is not limited to one loading of the multi-level mapping table to achieve a 100% buffer hit rate of mapping table, but there is no reads for loading the L2P mapping table other than the preset number of reads. Here, the memory controller 320 may caclulate the preset read times through firmware and according to the buffer hit rate of the target mapping table, and the buffer hit rate of the target mapping table is less than 100%.

An example of the present disclosure also provides an method of operating a memory system, the memory system includes: at least one non-volatile memory device and a memory controller coupled to the at least one non-volatile memory device; wherein, a multi-level mapping table is stored in the memory device, and the multi-level mapping table is to implement mapping from a logical address to a physical address; the memory controller includes a buffer, and a portion of the multi-level mapping table is stored in the buffer; the method including: performing a random read operation on the data stored in the memory device; in response to the random read range corresponding to the random read operation meeting a preset condition, adjusting the capacity for storing different levels of mapping tables in the buffer.

In some examples, the multi-level mapping table includes a first-level mapping table, a second-level mapping table, and a third-level mapping table, a physical address of the second-level mapping table is stored in the first-level mapping table, a physical address of the third-level mapping table is stored in the second-level mapping table, a physical address of data is stored in the third-level mapping table, the whole first-level mapping table, a portion of the second-level mapping table and a portion of the third-level mapping table are stored in the buffer; the adjusting the capacity for storing different levels of mapping tables in the buffer in response to the random read range corresponding to the random read operation meeting a preset condition including: in response to the random read range being greater than or equal to a preset value, increasing the ratio of the capacity for storing the second-level mapping table to the total capacity for storing the second-level mapping table and the third-level mapping table in the buffer.

In some examples, in response to the random read range being greater than or equal to a preset value, increasing the ratio of the capacity for storing the second-level mapping table to the total capacity for storing the second-level mapping table and the third-level mapping table in the buffer, including: in response to the random read range being greater than or equal to a preset value, obtaining a target buffer hit rate of mapping table; detecting the current buffer hit rate of mapping table; in response to the current buffer hit rate of mapping table being lower than the target buffer hit rate of mapping table, increasing the ratio of the capacity for storing the second-level mapping table to the total capacity for storing the second-level mapping table and the third-level mapping table in the buffer until the current buffer hit rate of mapping table is greater than or equal to the target buffer hit rate of mapping table.

In some examples, referring to FIG.7, the method of operating the memory system provided by the present disclosure may include the following operations:
S101. Detect, by the firmware, the random read range of the random read operation;
S102. Determine whether the random read range is greater than or equal to the preset value, if so, perform operation S103,
S103. Obtain the target buffer hit rate of mapping table;
S104. Detect the current buffer hit rate of mapping table, and determine whether the current buffer hit rate of mapping table is greater than or equal to the target buffer hit rate of mapping table, if not, perform operation S105;
S105. Adjust the capacity for different levels of storing mapping tables in the buffer, and then re-perform operation S104;
The detailed method of operating the memory system may be understood with reference to the specific examples in the foregoing examples, and will not be repeated here.

In some examples, the method further including: determining the difference between the current buffer hit rate of mapping table and the target buffer hit rate of mapping table; according to the difference, determining increasing quantity of the capacity for storing the second-level mapping table in the buffer in this adjustment; wherein the increasing quantity is positively correlated with the difference.

In some examples, the method further including: in response to the current buffer hit rate of mapping table being lower than the target buffer hit rate of mapping table, and the ratio of the current capacity for storing the second-level mapping table to the total capacity for storing the second-level mapping table and the third-level mapping table in the buffer reaching a preset ratio, stop adjusting the capacity for storing different levels of mapping tables in the buffer.

An example of the present disclosure provides a storage medium having executable instructions stored thereon, and the executable instructions, when executed by a processor, implement the operations of the method of any one of the examples described above.

In the examples of the present disclosure, the storage medium may include a NAND flash memory in the memory device 310, and executable instructions are stored in the storage medium, where the executable instructions may inlcude the firmware in the examples described above. In this way, the control component 323 including the processor in the memory controller 320 may execute the executable instructions in the storage medium, so as to implement the operations in any one of the methods in the examples described above.

It should be understood that reference throughout the description to "one example" or "an example" means that a particular feature, structure or characteristic related to the example is included in at least one example of the present disclosure. Thus, appearances of "in one example" or "in an example" in various places throughout the description are not necessarily referring to a same example. Furthermore, these particular features, structures or characteristics may be combined in any appropriate manner in one or more examples. It should be understood that in various examples of the present disclosure, sequence numbers of the processes described above do not mean the execution order, and the execution order of each process should be determined by its function and internal logic, and should not constitute any limitation to example process of examples of the present disclosure. The serial numbers of examples of the present disclosure described above are for the purpose of description only, and do not represent the advantages and disadvantages of the examples.

The above is only an example of the present disclosure, and does not limit the scope of the present disclosure, and under the inventive concept of the present disclosure, and the accompanying drawings, or direct/indirect application in other related technical fields are included in the claimed scope of the present disclosure.

### Industrial Applicability

In a memory system provided by examples of the present disclosure, a memory device stores a multi-level mapping table, and the buffer of the memory controller is to store a portion of the multi-level mapping table, and when the random read range meets a preset condition, the memory controller adjusts the capacity for storing different levels of mapping tables in the buffer. In this way, in one aspect, when a random read operation for a large range is performed, the memory controller may increase the capacity for storing at least one level of the mapping table in the buffer, so as to improve the buffer hit rate of mapping table, thereby the times of updating the mapping table from the memory device to the buffer is reduced, the time overhead for searching the corresponding mapping table is reduced, and the performance of a random read for a large range in the memory system is improved; in another aspect, dynamically adjusting the capacity for storing different levels of mapping tables in the buffer may improve utilization of the buffer and have little impact on other task scheduling, thus reduces problems such as buffer resource competition.

## Claims

1. A memory system (300), comprising:
at least one non-volatile memory device (310) in which a multi-level mapping table is stored, the multi-level mapping table being configured to implement mapping from a logical address to a physical address; and
a memory controller (320) coupled to the at least one non-volatile memory device (310) and including a buffer (321) in which a portion of the multi-level mapping table is stored, **characterized in that**
the memory controller (320) being configured to:
perform a random read operation on data stored in the memory device (310);
in response to a random read range being greater than or equal to a preset value, obtain a target buffer hit rate of a mapping table of the multi-level mapping table;
detect a current buffer hit rate of the mapping table of the multi-level mapping table; and
in response to the current buffer hit rate of the mapping table being lower than the target buffer hit rate of the mapping table of the multi-level mapping table, adjust capacity for storing different levels of mapping tables in the buffer (321).

2. The memory system (300) of claim 1, wherein:
the multi-level mapping table comprises a first-level mapping table, a second-level mapping table, and a third-level mapping table, wherein a physical address of the second-level mapping table is stored in the first-level mapping table, a physical address of the third-level mapping table is stored in the second-level mapping table, a physical address of data is stored in the third-level mapping table, and the whole first-level mapping table, a portion of the second-level mapping table, and a portion of the third-level mapping table are stored in the buffer (321).

3. The memory system (300) of claim 2, wherein the memory controller (320) is configured to:
in response to the random read range being greater than or equal to a preset value, increase a ratio of capacity for storing the second-level mapping table to total capacity for storing the second-level mapping table and the third-level mapping table in the buffer (321).

4. The memory system (300) of claim 3, wherein the memory controller (320) is further configured to:
increase the ratio of the capacity for storing the second-level mapping table to the total capacity for storing the second-level mapping table and the third-level mapping table in the buffer (321) in response to the current buffer hit rate of mapping table being lower than the target buffer hit rate of mapping table until the current buffer hit rate of mapping table is greater than or equal to the target buffer hit rate of mapping table.

5. The memory system (300) of claim 4, wherein the memory controller (320) is configured to:
i) determine a difference between the current buffer hit rate of mapping table and the target buffer hit rate of mapping table; and
determine increasing quantity of the capacity for storing the second-level mapping table in the buffer (321) in this adjustment according to the difference, wherein the increasing quantity is positively correlated with the difference;
and/or
ii) in response to the current buffer hit rate of mapping table being lower than the target buffer hit rate of mapping table, and a ratio of current capacity for storing the second-level mapping table to the total capacity for storing the second-level mapping table and the third-level mapping table in the buffer (321) reaching a preset ratio, stop adjusting the capacity for storing different levels of mapping tables in the buffer (321);
and/or
iii) determine the target buffer hit rate of mapping table according to the random read range.

6. The memory system (300) of claim 3, wherein the memory controller (320) is configured to:
in response to the random read range being less than the preset value, maintain the capacity for storing the second-level mapping table and the capacity for storing the third-level mapping table in the buffer (321) being unchanged.

7. The memory system (300) of claim 3, wherein the memory controller (320) is configured to:
determine the preset value according to a current capacity for storing the second-level mapping table in the buffer (321) and in combination with mapping rules for various levels of mapping tables.

8. The memory system (300) of claim 2, wherein the memory controller (320) is configured to:
in response to the random read range being greater than or equal to a preset value, increase a total capacity for storing the second-level mapping table and the third-level mapping table in the buffer (321).

9. The memory system (300) of claim 1, wherein:
the multi-level mapping table includes a first-level mapping table and a second-level mapping table,
wherein a physical address of the second-level mapping table is stored in the first-level mapping table, a physical address of data is stored in the second-level mapping table, a portion of the first-level mapping table and a portion of the second-level mapping table are stored in the buffer (321), and
the memory controller (320) is further configured to:
in response to the random read range being greater than or equal to a preset value, increase a ratio of the capacity for storing the first-level mapping table to a total capacity for storing the first-level mapping table and the second-level mapping table in the buffer (321).

10. The memory system of claim 1, wherein:
a) the memory system (300) includes a dynamic random-access memory, 'DRAM', -less memory system (300) and the buffer (321) includes a static random access memory, 'SRAM';
and/or
b) the memory system (300) includes a flash storage and the memory device (310) includes a NOT AND, 'NAND', memory.

11. A method of operating a memory system (300), wherein the memory system (300) includes:
at least one non-volatile memory device (310), which a multi-level mapping table is stored in, the multi-level mapping table is to implement mapping from a logical address to a physical address; and
a memory controller (320), which is coupled to the at least one non-volatile memory device (310) and includes a buffer (321) which a portion of the multi-level mapping table is stored in, and **characterized in that**
the method includes:
performing a random read operation on data stored in the memory device (310);
wherein
in response to a random read range being greater than or equal to a preset value, obtain a target buffer hit rate of a mapping table of the multi-level mapping table;
detect a current buffer hit rate of the mapping table of the multi-level mapping table; and
in response to the current buffer hit rate of the mapping table being lower than the target buffer hit rate of mapping table, , adjusting capacity for storing different levels of mapping tables in the buffer (321).

12. The method of claim 11, wherein:
the multi-level mapping table includes a first-level mapping table, a second-level mapping table, and a third-level mapping table,
a physical address of the second-level mapping table is stored in the first-level mapping table, a physical address of the third-level mapping table is stored in the second-level mapping table, and a physical address of data is stored in the third-level mapping table, the whole first-level mapping table, a portion of the second-level mapping table, and a portion of the third-level mapping table are stored in the buffer (321), and the method further comprises:
in response to a random read range corresponding to the random read operation meeting a preset condition, adjusting the capacity for storing different levels of mapping tables in the buffer (321) and
in response to the random read range being greater than or equal to a preset value, increasing a ratio of the capacity for storing the second-level mapping table to a total capacity for storing the second-level mapping table and the third-level mapping table in the buffer (321).

13. The method of claim 12, further comprising:
in response to the random read range being greater than or equal to a preset value, increasing the ratio of the capacity for storing the second-level mapping table to the total capacity for storing the second-level mapping table and the third-level mapping table in the buffer (321);
, increasing the ratio of the capacity for storing the second-level mapping table to the total capacity for storing the second-level mapping table and the third-level mapping table in the buffer (321) in response to the current buffer hit rate of mapping table being lower than the target buffer hit rate of mapping table until the current buffer hit rate of mapping table is greater than or equal to the target buffer hit rate of mapping table.

14. The method of claim 13, further comprising:
c) determining a difference between the current buffer hit rate of mapping table and the target buffer hit rate of mapping table; and
according to the difference, determining increasing quantity of the capacity for storing the second-level mapping table in the buffer (321) in this adjustment,
wherein the increasing quantity is positively correlated with the difference;
and/or
d) in response to the current buffer hit rate of mapping table being lower than the target buffer hit rate of mapping table, and the ratio of a current capacity for storing the second-level mapping table to the total capacity for storing the second-level mapping table and the third-level mapping table in the buffer (321) reaching a preset ratio, stopping adjusting the capacity for storing different levels of mapping tables in the buffer (321).

15. A storage medium having executable instructions stored thereon, which, when executed by a processor, implement operations of the method according to any one of claims 11 to 14.

## Patentansprüche

1. Speichersystem (300), umfassend:
zumindest eine nichtflüchtige Speichereinrichtung (310), in der eine Multilevel-Mappingtabelle gespeichert ist, die konfiguriert ist für die Umsetzung von logischen auf physikalische Adressen; und
einen Speichercontroller (320), der mit der zumindest einen nichtflüchtigen Speichereinrichtung (310) verbunden ist und einen Pufferspeicher (321) umfasst, in dem ein Teil der Multilevel-Mappingtabelle gespeichert ist,
**dadurch gekennzeichnet, dass** der Speichercontroller (320) dafür konfiguriert ist:
einen wahlfreien Lesevorgang an Daten durchzuführen, die in der Speichereinrichtung (310) gespeichert sind;
in Reaktion darauf, dass ein wahlfreier Read Range größer oder gleich einem voreingestellten Wert ist, eine Ziel-Puffer-Trefferrate einer Mappingtabelle der Multilevel-Mappingtabelle zu erhalten;
eine aktuelle Puffer-Trefferrate der Mappingtabelle der Multilevel-Mappingtabelle zu erfassen; und
in Reaktion darauf, dass die aktuelle Puffer-Trefferrate der Mappingtabelle niedriger ist als die Ziel-Puffer-Trefferrate der Mappingtabelle der Multilevel-Mappingtabelle, die Kapazität zum Speichern verschiedener Ebenen von Mappingtabellen in dem Pufferspeicher (321) anzupassen.

2. Speichersystem (300) nach Anspruch 1, wobei:
die Multilevel-Mappingtabelle eine Mappingtabelle der ersten Ebene, eine Mappingtabelle der zweiten Ebene und eine Mappingtabelle der dritten Ebene umfasst, wobei eine physikalische Adresse der Mappingtabelle der zweiten Ebene in der Mappingtabelle der ersten Ebene gespeichert ist, eine physikalische Adresse der Mappingtabelle der dritten Ebene in der Mappingtabelle der zweiten Ebene gespeichert ist, eine physikalische Adresse von Daten in der Mappingtabelle der dritten Ebene gespeichert ist und die gesamte Mappingtabelle der ersten Ebene, ein Teil der Mappingtabelle der zweiten Ebene und ein Teil der Mappingtabelle der dritten Ebene im Pufferspeicher (321) gespeichert sind.

3. Speichersystem (300) nach Anspruch 2, wobei der Speichercontroller (320) dafür konfiguriert ist:
in Reaktion darauf, dass der wahlfreie Read Range größer oder gleich einem voreingestellten Wert ist, ein Verhältnis der Speicherkapazität für die Mappingtabelle der zweiten Ebene zur Gesamtspeicherkapazität für die Mappingtabelle der zweiten Ebene und die Mappingtabelle der dritten Ebene in dem Pufferspeicher (321) zu erhöhen.

4. Speichersystem (300) nach Anspruch 3, wobei der Speichercontroller (320) ferner dafür konfiguriert ist:
in Reaktion darauf, dass die aktuelle Puffer-Trefferrate der Mappingtabelle niedriger ist als die Ziel-Puffer-Trefferrate der Mappingtabelle, das Verhältnis der Speicherkapazität für die Mappingtabelle der zweiten Ebene zur Gesamtspeicherkapazität für die Mappingtabelle der zweiten Ebene und die Mappingtabelle der dritten Ebene im Pufferspeicher (321) zu erhöhen, bis die aktuelle Puffer-Trefferrate der Mappingtabelle größer oder gleich der Ziel-Puffer-Trefferrate der Mappingtabelle ist.

5. Speichersystem (300) nach Anspruch 4, wobei der Speichercontroller (320) dafür konfiguriert ist:
i) eine Differenz zwischen der aktuellen Puffer-Trefferrate der Mappingtabelle und der Ziel-Puffer-Trefferrate der Mappingtabelle zu ermitteln; und
eine zunehmende Menge der Speicherkapazität für die Mappingtabelle der zweiten Ebene in dem Pufferspeicher (321) bei dieser Anpassung entsprechend der Differenz zu bestimmen, wobei die zunehmende Menge positiv mit der Differenz korreliert ist;
und/oder
(ii) in Reaktion darauf, dass die aktuelle Puffer-Trefferrate der Mappingtabelle niedriger ist als die Ziel-Puffer-Trefferrate der Mappingtabelle und ein Verhältnis der aktuellen Speicherkapazität für die Mappingtabelle der zweiten Ebene zur Gesamtspeicherkapazität für die Mappingtabelle der zweiten Ebene und die Mappingtabelle der dritten Ebene in dem Pufferspeicher (321) ein voreingestelltes Verhältnis erreicht, die Anpassung der Speicherkapazität für verschiedene Ebenen von Mappingtabellen in dem Pufferspeicher (321) zu stoppen;
und/oder
(iii) die Ziel-Puffer-Trefferrate der Mappingtabelle entsprechend dem wahlfreien Read Range zu bestimmen.

6. Speichersystem (300) nach Anspruch 3, wobei der Speichercontroller (320) dafür konfiguriert ist:
in Reaktion darauf, dass der wahlfreie Read Range geringer ist als der voreingestellte Wert, die Speicherkapazität für die Mappingtabelle der zweiten Ebene und die Speicherkapazität für die Mappingtabelle der dritten Ebene in dem Pufferspeicher (321) unverändert zu lassen.

7. Speichersystem (300) nach Anspruch 3, wobei der Speichercontroller (320) dafür konfiguriert ist:
den voreingestellten Wert entsprechend einer aktuellen Speicherkapazität für die Mappingtabelle der zweiten Ebene in dem Pufferspeicher (321) und in Kombination mit Abbildungsregeln für verschiedene Ebenen der Mappingtabellen zu bestimmen.

8. Speichersystem (300) nach Anspruch 2, wobei der Speichercontroller (320) dafür eingerichtet ist:
in Reaktion darauf, dass der wahlfreie Read Range größer oder gleich einem voreingestellten Wert ist, eine Gesamtspeicherkapazität für die Mappingtabelle der zweiten Ebene und die Mappingtabelle der dritten Ebene in dem Pufferspeicher (321) zu erhöhen.

9. Speichersystem (300) nach Anspruch 1, wobei:
die Multilevel-Mappingtabelle eine Mappingtabelle der ersten Ebene und eine Mappingtabelle der zweiten Ebenen umfasst,
wobei eine physikalische Adresse der Mappingtabelle der zweiten Ebene in der Mappingtabelle der ersten Ebene gespeichert ist, eine physikalische Adresse von Daten in der Mappingtabelle der zweiten Ebene gespeichert ist, ein Teil der Mappingtabelle der ersten Ebene und ein Teil der Mappingtabelle der zweiten Ebene in dem Pufferspeicher (321) gespeichert sind und wobei
der Speichercontroller (320) ferner dafür konfiguriert ist:
in Reaktion darauf, dass der wahlfreie Read Range größer oder gleich einem voreingestellten Wert ist, ein Verhältnis der Speicherkapazität für die Mappingtabelle der ersten Ebene zu einer Gesamtspeicherkapazität für die Mappingtabelle der ersten Ebene und die Mappingtabelle der zweiten Ebene in dem Pufferspeicher (321) zu erhöhen.

10. Speichersystem nach Anspruch 1, wobei:
a) das Speichersystem (300) ein Dynamic-Random-Access-Memory(DRAM)-loses Speichersystem (300) umfasst und der Pufferspeicher (321) einen Static Random Access Memory (ein SRAM) umfasst;
und/oder
b) das Speichersystem (300) einen NOT-AND(NAND)-Speicher (310) umfasst.

11. Verfahren für den Betrieb eines Speichersystems (300), wobei das Speichersystem (300) umfasst:
zumindest eine nichtflüchtige Speichereinrichtung (310), in der eine Multilevel-Mappingtabelle gespeichert ist, wobei die Multilevel-Mappingtabelle zur Umsetzung von logischen auf physikalische Adressen dient; und
einen Speichercontroller (320), der mit der zumindest einen nichtflüchtigen Speichereinrichtung (310) verbunden ist und einen Pufferspeicher (321) umfasst, in dem ein Teil der
Multilevel-Mappingtabelle gespeichert ist,
**dadurch gekennzeichnet, dass** das Verfahren umfasst:
Durchführen eines wahlfreien Lesevorgangs an Daten, die in der Speichereinrichtung (310) gespeichert sind; wobei
in Reaktion darauf, dass ein wahlfreier Read Range größer oder gleich einem voreingestellten Wert ist, eine Ziel-Puffer-Trefferrate einer Mappingtabelle der Multilevel-Mappingtabelle zu erhalten;
eine aktuelle Puffer-Trefferrate der Mappingtabelle der Multilevel-Mappingtabelle zu erfassen; und
in Reaktion darauf, dass die aktuelle Puffer-Trefferrate der Mappingtabelle niedriger ist als die Ziel-Puffer-Trefferrate der Mappingtabelle der Multilevel-Mappingtabelle, die Speicherkapazität für verschiedene Ebenen von Mappingtabellen in dem Pufferspeicher (321) anzupassen.

12. Verfahren nach Anspruch 11, wobei:
die Multilevel-Mappingtabelle eine Mappingtabelle der ersten Ebene, eine Mappingtabelle der zweiten Ebene und eine Mappingtabelle der dritten Ebene umfasst,
eine physikalische Adresse der Mappingtabelle der zweiten Ebene in der Mappingtabelle der ersten Ebene gespeichert ist,
eine physikalische Adresse der Mappingtabelle der dritten Ebene in der Mappingtabelle der zweiten Ebene gespeichert ist,
eine physikalische Adresse von Daten in der Mappingtabelle der dritten Ebene gespeichert ist, die gesamte Mappingtabelle der ersten Ebene, ein Teil der Mappingtabelle der zweiten Ebene und ein Teil der Mappingtabelle der dritten Ebene im Pufferspeicher (321) gespeichert sind, wobei das Verfahren ferner umfasst:
in Reaktion darauf, dass ein wahlfreier Read Range entsprechend dem wahlfreien Lesevorgang eine voreingestellte Bedingung erfüllt, die Anpassung der Speicherkapazität für verschiedene Ebenen von Mappingtabellen in dem Pufferspeicher (321) und in Reaktion darauf, dass der wahlfreie Read Range größer oder gleich einem voreingestellten Wert ist, die Erhöhung eines Verhältnisses der Speicherkapazität für die Mappingtabelle der zweiten Ebene zu einer Gesamtspeicherkapazität für die Mappingtabelle der zweiten Ebene und die Mappingtabelle der dritten Ebene in dem Pufferspeicher (321).

13. Verfahren nach Anspruch 12, ferner umfassend:
in Reaktion darauf, dass der wahlfreie Read Range größer oder gleich einem voreingestellten Wert ist, Vergrößern des Verhältnisses der Speicherkapazität für die Mappingtabelle der zweiten Ebene zur Gesamtspeicherkapazität für die Mappingtabelle der zweiten Ebene und die Mappingtabelle der dritten Ebene in dem Pufferspeicher (321);
in Reaktion darauf, dass die aktuelle Puffer-Trefferrate der Mappingtabelle niedriger ist als die Ziel-Puffer-Trefferrate der Mappingtabelle, Vergrößern des Verhältnisses der Speicherkapazität für die Mappingtabelle der zweiten Ebene zur Gesamtspeicherkapazität für die Mappingtabelle der zweiten Ebene und die Mappingtabelle der dritten Ebene in dem Pufferspeicher (321), bis die aktuelle Puffer-Trefferrate der Mappingtabelle größer oder gleich der Ziel-Puffer-Trefferrate der Mappingtabelle ist.

14. Verfahren nach Anspruch 13, ferner umfassend:
c) Ermitteln einer Differenz zwischen der aktuellen Puffer-Trefferrate der Mappingtabelle und der Ziel-Puffer-Trefferrate der Mappingtabelle; und
Bestimmen der zunehmenden Menge der Speicherkapazität für die Mappingtabelle der zweiten Ebene in dem Pufferspeicher (321) bei dieser Anpassung, wobei die zunehmende Menge positiv mit der Differenz korreliert ist,
und/oder
d) Stoppen der Anpassung der Speicherkapazität für die verschiedenen Ebenen von Mappingtabellen in dem Pufferspeicher (321) in Reaktion darauf, dass die aktuelle Puffer-Trefferrate der Mappingtabelle niedriger ist als die Ziel-Puffer-Trefferrate der Mappingtabelle und dass das Verhältnis einer aktuellen Speicherkapazität für die Mappingtabelle der zweiten Ebene zur Gesamtspeicherkapazität für die Mappingtabelle der zweiten Ebene und die Mappingtabelle der dritten Ebene in dem Pufferspeicher (321) ein voreingestelltes Verhältnis erreicht.

15. Speichermedium mit darauf gespeicherten ausführbaren Anweisungen, die bei Ausführung durch einen Computer Vorgänge des Verfahrens gemäß einem der Ansprüche 11 bis 14 implementieren.

## Revendications

1. Système de mémoire (300) comprenant:
au moins un dispositif de mémoire non volatile (310) dans lequel est stockée une table de mappage à plusieurs niveaux configurée pour la conversion d'adresses logiques en adresses physiques; et
un contrôleur de mémoire (320) connecté audit au moins un dispositif de mémoire non volatile (310) et comprenant une mémoire tampon (321) dans laquelle est stockée une partie de la table de mappage à plusieurs niveaux,
**caractérisé en ce que** le contrôleur de mémoire (320) est configuré pour:
effectuer une opération de lecture aléatoire sur des données stockées dans le dispositif de mémoire (310);
obtenir un taux de succès cible du tampon d'une table de mappage de la table de mappage à plusieurs niveaux en réponse au fait qu'une plage de lecture aléatoire est supérieure ou égale à une valeur prédéfinie;
détecter un taux de succès actuel du tampon de la table de mappage de la table de mappage à plusieurs niveaux; et
ajuster la capacité pour stocker des différents niveaux de tables de mappage dans la mémoire tampon (321) en réponse au fait que le taux de succès actuel du tampon de la table de mappage est inférieur au taux de succès cible du tampon de la table de mappage de la table de mappage à plusieurs niveaux.

2. Système de mémoire (300) selon la revendication (1), dans lequel:
la table de mappage à plusieurs niveaux comprend une table de mappage de premier niveau, une table de mappage de deuxième niveau et une table de mappage de troisième niveau, une adresse physique de la table de mappage de deuxième niveau étant stockée dans la table de mappage de premier niveau, une adresse physique de la table de mappage de troisième niveau étant stockée dans la table de mappage de deuxième niveau, une adresse physique de données étant stockée dans la table de mappage de troisième niveau, et la table de mappage complète de premier niveau, une partie de la table de mappage de deuxième niveau et une partie de la table de mappage de troisième niveau étant stockées dans la mémoire tampon (321).

3. Système de stockage (300) selon la revendication 2, dans lequel le contrôleur de mémoire (320) est configuré pour:
augmenter un rapport entre la capacité pour stocker la table de mappage de deuxième niveau et la capacité totale pour stocker la table de mappage de deuxième niveau et la table de mappage de troisième niveau dans la mémoire tampon (321) en réponse au fait que la plage de lecture aléatoire est supérieure ou égale à une valeur prédéfinie.

4. Système de mémoire (300) selon la revendication 3, dans lequel le contrôleur de mémoire (320) est en outre configuré pour:
augmenter le rapport entre la capacité pour stocker la table de mappage de deuxième niveau et la capacité totale pour stocker la table de mappage de deuxième niveau et la table de mappage de troisième niveau dans la mémoire tampon (321) jusqu'à ce que le taux de succès actuel du tampon de la table de mappage soit supérieur ou égal au taux de succès cible du tampon de la table de mappage, en réponse au fait que le taux de succès actuel du tampon de la table de mappage est inférieur au taux de succès cible du tampon de la table de mappage.

5. Système de mémoire (300) selon la revendication 4, dans lequel le contrôleur de mémoire (320) est configuré pour:
i) déterminer une différence entre le taux de succès actuel du tampon de la table de mappage et le taux de succès cible du tampon de la table de mappage; et déterminer, lors de cet ajustement, une quantité croissante de capacité pour stocker la table de mappage de deuxième niveau dans la mémoire tampon (321) en fonction de ladite différence, ladite quantité croissante étant positivement corrélée à la différence;
et/ou
(ii) arrêter l'ajustement de la capacité pour stocker des différents niveaux de tables de mappage dans la mémoire tampon (321) en réponse au fait que le taux de succès actuel du tampon de la table de mappage est inférieur au taux de de succès cible du tampon de la table de mappage et qu'un rapport entre la capacité actuelle pour stocker la table de mappage de deuxième niveau et la capacité totale pour stocker la table de mappage de deuxième niveau et la table de mappage de troisième niveau dans la mémoire tampon (321) atteint un rapport prédéfini;
et/ou
(iii) déterminer le taux de succès cible du tampon de la table de mappage en fonction de la plage de lecture aléatoire.

6. Système de mémoire (300) selon la revendication 3, dans lequel le contrôleur de mémoire (320) est configuré pour:
laisser inchangées la capacité pour stocker la table de mappage de deuxième niveau et la capacité pour stocker la table de mappage de troisième niveau dans la mémoire tampon (321) en réponse au fait que la plage de lecture aléatoire est inférieure à la valeur prédéfinie.

7. Système de stockage (300) selon la revendication 3, dans lequel le contrôleur de mémoire (320) est configuré pour:
déterminer la valeur prédéfinie en fonction d'une capacité actuelle pour stocker la table de mappage de deuxième niveau dans la mémoire tampon (321) et en combinaison avec des règles de mappage pour différents niveaux des tables de mappage.

8. Système de stockage (300) selon la revendication 2, dans lequel le contrôleur de stockage (320) est configuré pour:
augmenter une capacité totale pour stocker la table de mappage de deuxième niveau et la table de mappage de troisième niveau dans la mémoire tampon (321) en réponse au fait que la plage de lecture aléatoire est supérieure ou égale à une valeur prédéfinie.

9. Système de mémoire (300) selon la revendication 1, dans lequel:
la table de mappage à plusieurs niveaux comprend une table de mappage de premier niveau et une table de mappage de deuxième niveau,
une adresse physique de la table de mappage de deuxième niveau étant stockée dans la table de mappage de premier niveau, une adresse physique de données étant stockée dans la table de mappage de deuxième niveau, une partie de la table de mappage de premier niveau et une partie de la table de mappage de deuxième niveau étant stockées dans la mémoire tampon (321), et dans lequel
le contrôleur de mémoire (320) est en outre configuré pour:
augmenter un rapport entre la capacité pour stocker la table de mappage de premier niveau et la capacité totale pour stocker table de mappage de premier niveau et la table de mappage de deuxième niveau dans la mémoire tampon (321) en réponse au fait que la plage de lecture aléatoire est supérieure ou égale à une valeur prédéfinie.

10. Système de mémoire selon la revendication 1, dans lequel:
a) le système de mémoire (300) est un système de mémoire (300) sans mémoire vive dynamique (DRAM) et la mémoire tampon (321) comprend une mémoire vive statique (SRAM);
et/ou
b) le système de mémoire (300) comprend une mémoire NOT-AND (NAND) (310).

11. Procédé de fonctionnement d'un système de mémoire (300), le système de mémoire (300) comprenant:
au moins un dispositif de mémoire non volatile (310) dans lequel est stockée une table de mappage à plusieurs niveaux, ladite table de mappage à plusieurs niveaux servant à convertir des adresses logiques en adresses physiques; et
un contrôleur de mémoire (320) connecté audit au moins un dispositif de mémoire non volatile (310) et comprenant une mémoire tampon (321) dans laquelle est stockée une
partie de la table de mappage à plusieurs niveaux, **caractérisé en ce que** le procédé comprend:
l'exécution d'une opération de lecture aléatoire sur des données stockées dans le dispositif de mémoire (310);
dans lequel
on obtient un taux de succès cible du tampon de la table de mappage de la table de mappage à plusieurs niveaux, lorsqu'une plage de lecture aléatoire est supérieure ou égale à une valeur prédéfinie:
on détecte un taux de succès actuel du tampon de la table de mappage de la table de mappage à plusieurs niveaux; et
on ajuste la capacité pour stocker des différents niveaux de tables de mappage dans la mémoire tampon (321), lorsque le taux de succès actuel du tampon de la table de mappage est inférieur au taux de succès cible du tampon de la table de mappage.

12. Procédé selon la revendication 11, dans lequel:
la table de mappage à plusieurs niveaux comprend une table de mappage de premier niveau, une table de mappage de deuxième niveau et une table de mappage de troisième niveau,
une adresse physique de la table de mappage de deuxième niveau est stockée dans la table de mappage de premier niveau, une adresse physique de la table de mappage de troisième niveau est stockée dans la table de mappage de deuxième niveau, une adresse physique de données est stockée dans la table de mappage de troisième niveau, la table de mappage totale de premier niveau, une partie de la table de mappage de deuxième niveau et une partie de la table de mappage de troisième niveau sont stockées dans la mémoire tampon (321), le procédé comprenant en outre:
l'ajustement de la capacité pour stocker des différents niveaux de tables de mappage dans la mémoire tampon (321), lorsqu'une plage de lecture aléatoire correspondant à l'opération de lecture aléatoire satisfait à une condition prédéfinie, et
l'augmentation d'un rapport entre la capacité pour stocker la table de mappage de deuxième niveau et la capacité totale pour stocker la table de mappage de deuxième niveau et la table de mappage de troisième niveau dans la mémoire tampon (321), lorsque la plage de lecture aléatoire est supérieure ou égale à une valeur prédéfinie.

13. Procédé selon la revendication 12, comprenant en outre:
l'augmentation du rapport entre la capacité pour stocker la table de mappage de deuxième niveau et la capacité totale pour stocker la table de mappage de deuxième niveau et la table de mappage de troisième niveau dans la mémoire tampon (321), lorsque la plage de lecture aléatoire est supérieure ou égale à une valeur prédéfinie;
l'augmentation du rapport entre la capacité pour stocker la table de mappage de deuxième niveau et la capacité totale pour stocker la table de mappage de deuxième niveau et la table de mappage de troisième niveau dans la mémoire tampon (321), jusqu'à ce que le taux de succès actuel du tampon de la table de mappage soit supérieur ou égal au taux de succès cible du tampon de la table de mappage, lorsque le taux de succès actuel du tampon de la table de mappage est inférieur au taux de succès cible du tampon de la table de mappage.

14. Procédé selon la revendication 13, comprenant en outre:
c) la détermination d'une différence entre le taux de succès actuel du tampon de la table de mappage et le taux de succès cible du tampon de la table de mappage; et
la détermination de l'augmentation de la capacité pour stocker la table de mappage du deuxième niveau dans la mémoire tampon (321) lors de cet ajustement, ladite augmentation étant en corrélation positive avec ladite différence,
et/ou
d) l'arrêt de l'ajustement de la capacité pour stocker des différents niveaux de tables de mappage dans la mémoire tampon (321), lorsque le taux de succès actuel du tampon de la table de mappage est inférieur au taux de succès cible du tampon de la table de mappage et le rapport entre la capacité actuelle pour stocker la table de mappage de deuxième niveau et la capacité totale pour stocker la table de mappage de deuxième niveau et la table de mappage de troisième niveau dans la mémoire tampon (321) atteigne un rapport prédéfini.

15. Moyen de stockage sur lequel sont stockées des instructions exécutables qui, lorsqu'elles sont exécutées par un ordinateur, mettent en œuvre les opérations du procédé selon l'une des revendications 11 à 14.
